## Europäisches Patentamt
## European Patent Office
## Office européen des brevets

(19)

(11) Veröffentlichungsnummer : **0 396 994 B1**

## (12) EUROPÄISCHE PATENTSCHRIFT

(45) Veröffentlichungstag der Patentschrift :
**23.12.92 Patentblatt 92/52**

(21) Anmeldenummer : **90108175.2**

(22) Anmeldetag : **28.04.90**

(51) Int. Cl.$^5$ : **C03C 17/25**

(54) **Verfahren zur Herstellung elektrisch leitender, IR-reflektierender fluordotierter Zinnoxidschichten auf der Oberfläche von Gegenständen aus Glas oder Keramik oder von Emailbeschichtungen und Zubereitung zum Aufbringen solcher Schichten.**

(30) Priorität : **10.05.89 DE 3915232**

(43) Veröffentlichungstag der Anmeldung :
**14.11.90 Patentblatt 90/46**

(45) Bekanntmachung des Hinweises auf die
Patenterteilung :
**23.12.92 Patentblatt 92/52**

(84) Benannte Vertragsstaaten :
**AT BE CH DE ES GB IT LI LU NL**

(56) Entgegenhaltungen :
**EP-A- 0 158 399**

(56) Entgegenhaltungen :
**EP-A- 0 186 481**
**EP-A- 0 338 417**
**EP-A- 0 357 263**
**DE-B- 2 847 453**
**US-A- 3 759 743**
**PATENT ABSTRACTS OF JAPAN Band 10, Nr. 226 (C-364)(2282), 7. August 1986; & JP-A-6263546 (NITTO KASEI K.K.) 01.04.1986**

(73) Patentinhaber : **Th. Goldschmidt AG**
**Goldschmidtstrasse 100 Postfach 101461**
**W-4300 Essen 1 (DE)**

(72) Erfinder : **Ruf, Erich, Dr.**
**Auf'm Gartenstück 10**
**W-4300 Essen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung elektrisch leitender, IR-reflektierender fluordotierter Zinnoxidschichten auf der Oberfläche von Gegenständen aus Glas oder Keramik oder von Emailbeschichtungen durch Aufbringen einer organischen Lösung von Mischungen bestehend aus Alkylzinnoxiden und Trifluoressigsäure auf die auf 400 700° C erhitzte Oberfläche. Die Erfindung betrifft des weiteren eine entsprechende Zubereitung zum Aufbringen elektrisch leitfähiger, IR-reflektierender Schichten auf die Oberfläche von Glas, Keramik oder Email zur Durchführung dieses Verfahrens.

Es ist bekannt, daß fluordotierte Zinnoxidschichten auf Oberflächen aus Glas, Keramik oder Email den elektrischen Widerstand der vergüteten Oberflächen herabsetzen und die Infrarotreflexion erhöhen. Zur Herstellung solcher Zinnoxidschichten werden Kombinationen geeigneter Zinnverbindungen mit fluorhaltigen Substanzen oder aber fluorhaltige Zinnverbindungen mit den auf 400 - 800° C erhitzten Oberflächen in Kontakt gebracht. Auf der Glas-, Keramik- oder Emailoberfläche bildet sich eine zusammenhängende Zinnoxidschicht, die mit Fluor dotiert ist. Die Fluordotierung ist für die gewünschten Eigenschaften der vergüteten Oberflächen, wie erhöhte Leitfähigkeit oder IR-Reflexion, von entscheidender Bedeutung.

Ein besonders einfaches Verfahren zur Aufbringung von fluordotierten Zinnoxidschichten ist das Aufsprühen von Lösungen geeigneter zinn- und fluorhaltiger Verbindungen.

In der DE-OS 22 46 193 wird ein Verfahren zur Herstellung von transparenten elektrisch leitenden Filmen auf Glasoberflächen beschrieben, wobei eine Lösung eines Organozinnsalzes der Trifluoressigsäure in Methylethylketon verwendet wird. Diese Organozinnsalze werden beispielsweise aus Zinn(II)oxid, Dibutylzinndiacetat, Dibutylzinnoxid, Tributylzinnoxid durch mehrstündiges Erhitzen mit Trifluoressigsäure oder anderen perfluorierten Monocarbonsäuren im Überschuß hergestellt, der Überschuß an perfluorierter Säure und das Reaktionswasser werden abdestilliert und der Rückstand durch Umkristallisation gereinigt. Die Zubereitung zur Aufbringung von fluordotierten Zinnoxidschichten im beanspruchten Verfahren wird dann aus den gereinigten Zinncarboxylatverbindungen durch Lösen in Methylethylketon hergestellt. Für die Herstellung der Beschichtungslösungen sind also mehrere Verfahrensschritte notwendig.

Die nach dem oben geschilderten Verfahren hergestellten Zinncarboxylate weisen einen hohen Fluorgehalt auf, der unveränderbar durch deren Molekülstruktur vorgegeben ist. Hohe Fluorgehalte in den Ausgangsmaterialien für die Herstellung elektrisch leitender Zinnoxidschichten auf Glas-, Keramik- oder Emailoberflächen bewirken aber eine Überdotierung mit Fluor und verursachen eine deutliche Verschlechterung der geforderten Eigenschaften solcher Vergütungen. So liegen die erreichten Flächenwiderstandswerte solcher Zinnoxidschichten zwischen 32 und 65 Ohm/Quadrat. Es sind jedoch niedrigere Flächenwiderstandswerte erwünscht.

Mit den in der DE-OS 22 46 193 offenbarten Zinncarboxylaten der Trifluoressigsäure oder der analogen höheren perfluorierten Monocarbonsäuren und den daraus hergestellten Zubereitungen zur Oberflächenbeschichtung von Glas ist die Einstellung einer optimalen Fluordotierung in den Beschichtungen aufgrund der vorgegebenen unveränderlichen Molekülstruktur nicht möglich.

Der Erfindung liegt daher die Aufgabe zugrunde, ein verbessertes Verfahren zur Herstellung elektrisch leitender, IR-reflektierender fluordotierter Zinnoxidschichten auf Glas-, Keramik- oder Emailoberflächen durch Aufbringen einer organischen Lösung von geeigneten Alkylzinnoxiden und Trifluoressigsäure zu finden, um eine variable Fluordotierung und damit eine Optimierung des Flächenwiderstandswertes sowie der IR-Reflexion zu erreichen.

Überraschenderweise kann die erfindungsgemäße Aufgabe mit einem Verfahren der eingangs bezeichneten Gattung dadurch gelöst werden, daß man eine Lösung von Alkylzinnoxid und Trifluoressigsäure, in der die Trifluoressigsäure in unterstöchiometrischer Menge vorliegt, verwendet.

Es war für den Fachmann überraschend, daß Alkylzinnoxide mit unterstöchiometrischen Mengen an Trifluoressigsäure bereits bei Raumtemperatur in indifferenten organischen Lösungsmitteln unter Rühren eine klare Lösung bilden. Im Gegensatz hierzu wird in der DE-OS 22 46 193 vorgeschrieben, zur Herstellung der entsprechenden Alkylzinncarboxylate die Alkylzinnoxide und Trifluoressigsäure in stöchiometrischen Mengen mehrere Stunden zu erhitzen.

Das erfindungsgemäße Verfahren bietet somit den Vorteil, daß die verwendete Zubereitung zum Aufbringen elektrisch leitfähiger, IR-reflektierender Schichten auf die Oberfläche von Glas, Keramik oder Email durch nur einen Verfahrensschritt hergestellt werden kann, wobei weder aufwendige Apparaturen noch eine äußere Energiezufuhr benötigt werden. Des weiteren wird durch die unterstöchiometrische Verwendung von Trifluoressigsäure eine Reduktion des Materialverbrauchs und eine Kostensenkung erzielt.

Da Lösungen von Alkylzinnoxiden mit unterstöchiometrischen Mengen an Trifluoressigsäure über einen großen Bereich variierender molarer Mengenverhältnisse hergestellt werden können, ist damit außerdem die Einstellung einer definierten Fluormenge nach entsprechenden Vorgaben möglich. Somit ist die Fluordotierung der zu erzeugenden Zinnoxidschichten durch die Variation der molaren Mengenverhältnisse in den verwendeten Lösungen genau regulierbar.

Die bevorzugt verwendeten Alkylzinnoxide sind solche, die einen Alkylrest mit 1 - 5 Kohlenstoffatomen besitzen, insbesondere 4 Kohlenstoffatome. Besonders bevorzugt ist die Verwendung von Mono-, Di- oder Tributylzinnoxid.

Bei einer stöchiometrischen Umsetzung von Mono-, Di- oder Tributylzinnoxid mit Trifluoressigsäure entstehen nach der DE-OS 22 46 193 definierte Salze. Die Reaktion von Trifluoressigsäure liefert mit Monobutylzinnoxid im Molverhältnis 1 : 3 Monobutyl-zinn-tris(trifluoracetat) $C_4H_9(CF_3COO)_3Sn$, mit Dibutylzinnoxid im Molverhältnis 1 : 2 Dibutylzinn-bis(trifluoracetat) $(C_4H_9)_2(CF_3COO)_2Sn$ und mit Tributylzinnoxid (Hexabutyldistannoxan) im Molverhältnis 1 : 2 Tributylzinntrifluoracetat 2 $(C_4H_9)_3(CF_3COO)Sn$. Diese Salze haben jedoch aufgrund ihres hohen und unveränderbaren Fluorgehaltes den Nachteil, Fluorüberdotierungen und damit verbundenen Verschlechterungen der Eigenschaften in den mit ihren Lösungen erzeugten Zinnoxidschichten zu bewirken.

Vorzugsweise wird die Verringerung des Fluorgehaltes beim erfindungsgemäßen Verfahren dadurch erreicht, daß man eine Lösung mit unterstöchiometrischen Mengen an Trifluoressigsäure verwendet, welche

a) Monobutylzinnoxid und Trifluoressigsäure in einem molaren Verhältnis von 1 : < 3 bis 1 : 0,15 oder

b) Dibutylzinnoxid und Trifluoressigsäure in einem molaren Verhältnis von 1 : < 2 bis 1 : 0,74 oder

c) Tributylzinnoxid und Trifluoressigsäure in einem molaren Verhältnis von 1 : < 2 bis 1 : 0,15 enthält.

In den hier definierten Bereichen entstehen erfindungsgemäß klare Lösungen aus den eingesetzten Komponenten. Klare Lösungen sind für ein problemloses Aufbringen unerläßlich und gewähren eine homogene und trübungsfreie Zinnoxidbeschichtung.

Um eine Überdotierung mit Fluor zu vermeiden, ist jedoch eine Zusammensetzung zu wählen, die deutlich unter der von den durch stöchiometrische Umsetzung von Butylzinnoxiden und Trifluoressigsäure hergestellten Butylzinncarboxylaten vorgegebenen liegt.

Besonders bevorzugt werden beim erfindungsgemäßen Verfahren Lösungen verwendet, welche

a) Monobutylzinnoxid und Trifluoressigsäure in einem molaren Verhältnis von 1 : < 2 bis 1 : 0,15 oder

b) Dibutylzinnoxid und Trifluoressigsäure in einem molaren Verhältnis von 1 : < 1,5 bis 1 : 0,74 oder

c) Tributylzinnoxid und Trifluoressigsäure in einem molaren Verhältnis von 1 : < 1,5 bis 1 : 0,15 enthalten.

Zur Herstellung der für das erfindungsgemäße Verfahren verwendeten Lösungen können verschiedene organische Lösungsmittel verwendet werden; bevorzugt werden Essigsäureethylester oder Methylethylketon oder deren Gemische verwendet.

Ein weiterer Gegenstand der vorliegenden Erfindung besteht in der Bereitstellung einer Zubereitung zum Aufbringen elektrisch leitfähiger, IR-reflektierender Schichten auf die Oberfläche von Glas, Keramik oder Email nach dem erfindungsgemäßen Verfahren, welche in einem organischen Lösungsmittel gelöst 50 - 80 Gew.-% Mischungen bestehend aus Alkylzinnoxiden und Trifluoressigsäure enthält, und dadurch gekennzeichnet ist, daß sie

a) Monobutylzinnoxid und Trifluoressigsäure in einem molaren Verhältnis von 1 : < 3 bis 1 : 0,15 oder

b) Dibutylzinnoxid und Trifluoressigsäure in einem molaren Verhältnis von 1 : < 2 bis 1 : 0,74 oder

c) Tributylzinnoxid und Trifluoressigsäure in einem molaren Verhältnis von 1 : < 2 bis 1 : 0,15 enthält.

Für eine optimale Fluordotierung von Zinnoxidschichten nach dem erfindungsgemäßen Verfahren sind besonders Zubereitungen bevorzugt, die

a) Monobutylzinnoxid und Trifluoressigsäure in einem molaren Verhältnis von 1 : < 2 bis 1 : 0,15 oder

b) Dibutylzinnoxid und Trifluoressigsäure in einem molaren Verhältnis von 1 : < 1,5 bis 1 : 0,74 oder

c) Tributylzinnoxid und Trifluoressigsäure in einem molaren Verhältnis von 1 : < 1,5 bis 1 : 0,15 enthalten.

Zur Herstellung der erfindungsgemäßen Zubereitungen können verschiedene organische Lösungsmittel verwendet werden, bevorzugt werden Essigsäureethylester oder Methylethylketon oder deren Gemische verwendet. Die Herstellung dieser erfindungsgemäßen Zubereitungen erfolgt dabei in einfacher Weise durch Zusammengeben der Komponenten und Rühren bei Raumtemperatur, wobei bereits nach 5 - 15 Minuten eine klare Lösung vorliegt.

Besonders überraschend ist hierbei die Tatsache, daß Monobutylzinnoxid und Dibutylzinnoxid, die in Essigsäureethylester weitgehend unlöslich sind, durch die Zugabe von geringen Mengen Trifluoressigsäure in Lösung gebracht werden können. Im Fall des Monobutylzinnoxids ist selbst die Zugabe von Trifluoressigsäure in einem molaren Mengenverhältnis von 1 : 0,15 noch ausreichend, um eine klare Lösung herzustellen.

Ein besonders bevorzugtes Beispiel einer erfindungsgemäßen Zubereitung für das erfindungsgemäße Verfahren zur Herstellung von fluordotierten Zinnoxidschichten ist daher eine Lösung, die aus

40 bis 70 Gew.-% Butylzinnoxid

3 bis 20 Gew.-% Trifluoressigsäure

10 bis 57 Gew.-% Essigsäureethylester und/oder Methylethylketon

besteht.

Zur Durchführung des erfindungsgemäßen Verfahrens wird zweckmäßig die erfindungsgemäße Zubereitung mit einer Sprühpistole im Sprühzerstäubungsverfahren unter Verwendung von Preßluft auf die auf 400 - 700° C erhitzten Oberflächen aus Glas, Keramik oder Email aufgebracht. Dabei muß die Temperatur unterhalb der Schmelz- oder Erweichungstemperatur des zu beschichtenden Materials liegen.

Durch Pyrolyse wird auf der Oberfläche ein mit Fluor dotierter Zinnoxidfilm erzeugt. Je nach angewendeter Menge der erfindungsgemäßen Zubereitung wird ein Film mit Schichtdicken von 100 - 1000 nm erhalten. Die so erzeugten Beschichtungen haben deutlich niedrigere Flächenwiderstände als die im Stand der Technik bekannten. Bei einer Schichtdicke von 300 - 400 nm werden Werte von 8 - 15 Ohm/Quadrat gemessen.

Die nach dem erfindungsgemäßen Verfahren hergestellten Beschichtungen weisen auf Glas eine ausgezeichnete Transparenz auf. Für Licht im sichtbaren Bereich sind diese Beschichtungen weitgehend durchlässig, während IR-Strahlung oberhalb von 2500 nm bei einer Schichtdicke von 300 - 400 nm zu 83 - 90 % reflektiert wird.

Zur weiteren Erläuterung der Erfindung sind die nachfolgenden Beispiele aufgeführt.

Beispiel 1

In einem 200-ml-Becherglas, das mit einem Magnetrührer versehen ist, werden 80,2 g Monobutylzinnoxid in 85,8 g Essigsäureethylester dispergiert. Zu dieser Dispersion werden unter Rühren 34,0 g Trifluoressigsäure hinzugegeben. Die Dispersion erwärmt sich auf ca. 50° C. Nach etwa 15 Min. erhält man eine klare Lösung. Nach Abkühlen dieser Lösung auf Raumtemperatur werden 5 ml in den Becher einer Sprühpistole gegeben und auf eine Flachglasscheibe gesprüht (160 mm x 180 mm x 6 mm), die zuvor 6 Min. bei einer Ofentemperatur von ca. 700° C aufgeheizt wurde. Die so beschichtete Glasplatte weist folgende Werte auf:

Flächenwiderstand 13 Ohm/Quadrat
IR-Reflexion 83 %
Schichtdicke 350 nm

Beispiel 2

In einem 200-ml-Becherglas, das mit einem Magnetrührer versehen ist, werden 100 g Dibutylzinnoxid in 66 g Essigsäureethylester dispergiert. Zu dieser Dispersion werden unter Rühren 34 g Trifluoressigsäure hinzugegeben. Die Dispersion erwärmt sich auf ca. 50° C. Nach etwa 15 Min. erhält man eine klare Lösung. Nach Abkühlen dieser Lösung auf Raumtemperatur werden 6 ml in den Becher einer Sprühpistole gegeben und auf eine Flachglasscheibe gesprüht (160 mm x 180 mm x 6 mm), die zuvor 6 Min. bei einer Ofentemperatur von ca. 700° C aufgeheizt wurde. Die so beschichtete Glasplatte weist folgende Werte auf:

Flächenwiderstand 10,4 Ohm/Quadrat
IR-Reflexion 88 %
Schichtdicke 400 nm

Beispiel 3

In einem 200-ml-Becherglas, das mit einem Magnetrührer versehen ist, werden 119,8 g Tributylzinnoxid in 45,48 g Essigsäureethylester dispergiert. Zu dieser Dispersion werden unter Rühren 34,36 g Trifluoressigsäure hinzugegeben. Die Dispersion erwärmt sich auf ca. 50° C. Nach etwa 5 Min. erhält man eine klare Lösung. Nach Abkühlen dieser Lösung auf Raumtemperatur werden 5 ml in den Becher einer Sprühpistole gegeben und auf eine Flachglasscheibe gesprüht (160 mm x 180 mm x 6 mm), die zuvor 6 Min. bei einer Ofentemperatur von ca. 700° C aufgeheizt wurde. Die so beschichtete Glasplatte weist folgende Werte auf:

Flächenwiderstand 9 Ohm/Quadrat
IR-Reflexion 90 %
Schichtdicke 400 nm

Beispiel 4

In einem 200-ml-Becherglas, das mit einem Magnetrührer versehen ist, werden 119,8 g Tributylzinnoxid in 45,48 g Essigsäureethylester dispergiert. Zu dieser Dispersion werden unter Rühren 34,36 g Trifluoressigsäure hinzugegeben. Die Dispersion erwärmt sich auf ca. 50° C. Nach etwa 5 Min. erhält man eine klare Lösung. Nach Abkühlen dieser Lösung auf Raumtemperatur werden 5 ml in den Becher einer Sprühpistole gegeben und auf ein emailliertes Stahlblech gesprüht (100 mm x 100 mm x 1,5 mm), das zuvor 6 Min. bei einer Ofentemperatur von ca. 700° C aufgeheizt wurde. Das so beschichtete emaillierte Stahlblech weist folgende Werte auf:

Flächenwiderstand 8 Ohm/Quadrat
IR-Reflexion 65 %
Schichtdicke 440 nm

Beispiel 5

In einem 200-ml-Becherglas, das mit einem Magnetrührer versehen ist, werden 119,8 g Tributylzinnoxid in 45,48 g Essigsäureethylester dispergiert. Zu dieser Dispersion werden unter Rühren 34,36 g Trifluoressigsäure hinzugegeben. Die Dispersion erwärmt sich auf ca. 50° C. Nach etwa 5 Min. erhält man eine klare Lösung. Nach Abkühlen dieser Lösung auf Raumtemperatur werden 5 ml in den Becher einer Sprühpistole gegeben und auf einen unglasierten Keramikscherben gesprüht (110 mm x 110 mm x 4 mm), der zuvor 6 Min. bei einer Ofentemperatur von ca. 700° C aufgeheizt wurde. Der so beschichtete unglasierte Keramikscherben weist folgende Werte auf:

Flächenwiderstand 15 Ohm/Quadrat

Die mit dem erfindungsgemäßen Verfahren unter Verwendung der erfindungsgemäßen Zubereitungen auf unterschiedliche Substrate aufgebrachten Zinnoxidschichten weisen Flächenwiderstandswerte von 8 - 15 Ohm/Quadrat bei einer Schichtdicke von 300 - 400 nm auf und sind damit eine deutliche Verbesserung zu den aus der DE-OS 22 46 193 bekannten Werten von 45 - 65 Ohm/Quadrat bei einer vergleichbaren Schichtdicke.

**Patentansprüche**

1. Verfahren zur Herstellung elektrisch leitender, IR-reflektierender fluordotierter Zinnoxidschichten auf der Oberfläche von Gegenständen aus Glas oder Keramik oder von Emailbeschichtungen durch Aufbringen einer organischen Lösung von Mischungen bestehend aus Alkylzinnoxiden und Trifluoressigsäure auf die auf 400-700° C erhitzte Oberfläche, dadurch gekennzeichnet, daß man eine Lösung von Alkylzinnoxid und Trifluoressigsäure, in der die Trifluoressigsäure in unterstöchiometrischer Menge vorliegt, verwendet.

2. Verfahren nach Anspruch 1, dadurch gekennzeichnet, daß man eine Lösung verwendet, welche als Alkylzinnoxide Mono-, Di- und/oder Tributylzinnoxid enthält.

3. Verfahren nach Anspruch 1 oder 2, dadurch gekennzeichnet, daß man eine Lösung verwendet, welche

   a) Monobutylzinnoxid und Trifluoressigsäure in einem molaren Verhältnis von 1 : < 3 bis 1 : 0,15 oder
   b) Dibutylzinnoxid und Trifluoressigsäure in einem molaren Verhältnis von 1 : < 2 bis 1 : 0,74 oder
   c) Tributylzinnoxid und Trifluoressigsäure in einem molaren Verhältnis von 1 : < 2 bis 1 : 0,15
   enthält.

4. Verfahren nach Anspruch 3, dadurch gekennzeichnet, daß man eine Lösung verwendet, welche

   a) Monobutylzinnoxid und Trifluoressigsäure in einem molaren Verhältnis von 1 : < 2 bis 1 : 0,15 oder
   b) Dibutylzinnoxid und Trifluoressigsäure in einem molaren Verhältnis von 1 : < 1,5 bis 1 : 0,74 oder
   c) Tributylzinnoxid und Trifluoressigsäure in einem molaren Verhältnis von 1 : < 1,5 bis 1 : 0,15
   enthält.

5. Verfahren nach einem oder mehreren der vorhergehenden Ansprüche, dadurch gekennzeichnet, daß man eine Lösung verwendet, welche als Lösungsmittel Essigsäureethylester oder Methylethylketon enthält.

6. Zubereitung zum Aufbringen elektrisch leitfähiger, IR-reflektierender Schichten auf die Oberfläche von Glas, Keramik oder Email, welche in einem organischen Lösungsmittel gelöst 50 - 80 Gew.-% Mischungen bestehend aus Alkylzinnoxiden und Trifluoressigsäure enthält, dadurch gekennzeichnet, daß sie

   a) Monobutylzinnoxid und Trifluoressigsäure in einem molaren Verhältnis von 1 : < 3 bis 1 : 0,15 oder
   b) Dibutylzinnoxid und Trifluoressigsäure in einem molaren Verhältnis von 1 : < 2 bis 1 : 0,74 oder
   c) Tributylzinnoxid und Trifluoressigsäure in einem molaren Verhältnis von 1 : < 2 bis 1 : 0,15
   enthält.

7. Zubereitung nach Anspruch 6, dadurch gekennzeichnet, daß sie

   a) Monobutylzinnoxid und Trifluoressigsäure in einem molaren Verhältnis von 1 : < 2 bis 1 : 0,15 oder
   b) Dibutylzinnoxid und Trifluoressigsäure in einem molaren Verhältnis von 1 : < 1,5 bis 1 : 0,74 oder
   c) Tributylzinnoxid und Trifluoressigsäure in einem molaren Verhältnis von 1 : < 1,5 bis 1 : 0,15
   enthält.

8. Zubereitung nach Anspruch 6 oder 7, dadurch gekennzeichnet, daß man als Lösungsmittel Essigsäureethylester oder Methylethylketon verwendet.

**Claims**

1. Process for the production of electroconductive, IR-reflective, fluorine-doped tin oxide layers on the surface of glass or ceramic articles or of enamel coatings by applying an organic solution of mixtures comprising alkyltin oxides and trifluoroacetic acid to the surface which is heated to 400-700°C, characterised in that a solution of alkyltin oxide and trifluoroacetic acid in which the trifluoroacetic acid is present in a substoichiometric amount is used.

2. Process according to Claim 1, characterised in that a solution is used in which the alkyltin oxide is mono-, di- and/or tributyltin oxide.

3. Process according to Claim 1 or 2, characterised in that a solution is used which contains
a) monobutyltin oxide and trifluoroacetic acid in a molar ratio of from 1 : < 3 to 1 : 0.15 or
b) dibutyltin oxide and trifluoroacetic acid in a molar ratio of from 1 : < 2 to 1 : 0.74 or
c) tributyltin oxide and trifluoroacetic acid in a molar ratio of from 1 : < 2 to 1 : 0.15.

4. Process according to Claim 3, characterised in that a solution is used which contains
a) monobutyltin oxide and trifluoroacetic acid in a molar ratio of from 1 : < 2 to 1 : 0.15 or
b) dibutyltin oxide and trifluoroacetic acid in a molar ratio of from 1 : < 1.5 to 1 : 0.74 or
c) tributyltin oxide and trifluoroacetic acid in a molar ratio of from 1 : < 1.5 to 1 : 0.15.

5. Process according to one or more of the preceding claims, characterised in that a solution is used in which the solvent is ethyl acetate or methyl ethyl ketone.

6. Preparation for the application of electroconductive, IR-reflective layers to the surface of glass, ceramic or enamel, which contains, dissolved in an organic solvent, 50-80 % by weight of mixtures comprising alkyltin oxides and trifluoroacetic acid, characterised in that it contains
a) monobutyltin oxide and trifluoroacetic acid in a molar ratio of from 1 : < 3 to 1 : 0.15 or
b) dibutyltin oxide and trifluoroacetic acid in a molar ratio of from 1 : < 2 to 1 : 0.74 or
c) tributyltin oxide and trifluoroacetic acid in a molar ratio of from 1 : < 2 to 1 : 0.15.

7. Preparation according to Claim 6, characterised in that it contains
a) monobutyltin oxide and trifluoroacetic acid in a molar ratio of from 1 : < 3 to 1 : 0.15 or
b) dibutyltin oxide and trifluoroacetic acid in a molar ratio of from 1 : < 1.5 to 1 : 0.74 or
c) tributyltin oxide and trifluoroacetic acid in a molar ratio of from 1 : < 1.5 to 1 : 0.15.

8. Preparation according to Claim 6 or 7, characterised in that the solvent used is ethyl acetate or methyl ethyl ketone.

**Revendications**

1. Procédé de préparation de couches d'oxyde d'étain électriquement conductrices, réfléchissant les IR et dopées au fluor sur la surface d'objets en verre ou en céramique ou de revêtements d'émail par application d'une solution organique de mélanges constitués d'oxydes d'alkyl-étain et d'acide trifluoroacétique sur la surface chauffée à 400-700°C, caractérisé en ce qu'on utilise une solution d'oxyde d'alkyl-étain et d'acide trifluoroacétique, dans laquelle l'acide trifluoroacétique se trouve en une quantité inférieure à la stoechiométrie.

2. Procédé suivant la revendication 1, caractérisé en ce qu'on utilise une solution qui contient, comme oxydes d'alkyl-étain, de l'oxyde de monobutyl-étain, de dibutyl-étain et/ou de tributyl-étain.

3. Procédé suivant l'une des revendications 1 et 2, caractérisé en ce qu'on utilise une solution qui contient
a) de l'oxyde de monobutyl-étain et de l'acide trifluoroacétique dans un rapport molaire de 1 / < 3 à 1/0,15, ou
b) de l'oxyde de dibutyl-étain et de l'acide trifluoroacétique dans un rapport molaire de 1 / < 2 à 1/0,74, ou
c) de l'oxyde de tributyl-étain et de l'acide trifluoroacétique dans un rapport molaire de 1 / < 2 à 1/0,15.

4. Procédé suivant la revendication 3, caractérisé en ce qu'on utilise une solution qui contient
a) de l'oxyde de monobutyl-étain et de l'acide trifluoroacétique dans un rapport molaire de 1 / < 2 à 1/0,15, ou
b) de l'oxyde de dibutyl-étain et de l'acide trifluoroacétique dans un rapport molaire de 1 / < 1,5 à 1/0,74, ou
c) de l'oxyde de tributyl-étain et de l'acide trifluoroacétique dans un rapport molaire de 1 / < 1,5 à 1/0,15.

5. Procédé suivant l'une ou plusieurs des revendications précédentes, caractérisé en ce qu'on utilise une solution qui contient, comme solvant, de l'acétate d'éthyle ou de la méthyléthylcétone.

6. Préparation pour l'application de couches électriquement conductrices et réfléchissant les IR sur la surface du verre, de la céramique ou de l'émail, qui contient, en solution dans un solvant organique, 50 - 80 % en poids de mélanges constitués d'oxydes d'alkyl-étain et d'acide trifluoroacétique, caractérisée en ce qu'elle contient :

a) de l'oxyde de monobutyl-étain et de l'acide trifluoroacétique dans un rapport molaire de 1 / < 3 à 1/0,15, ou

b) de l'oxyde de dibutyl-étain et de l'acide trifluoroacétique dans un rapport molaire de 1 / < 2 à 1/ 0,74, ou

c) de l'oxyde de tributyl-étain et de l'acide trifluoroacétique dans un rapport molaire de 1 / < 2 à 1 / 0,15.

7.   Préparation suivant la revendication 6, caractérisée en ce qu'elle contient

a) de l'oxyde de monobutyl-étain et de l'acide trifluoroacétique dans un rapport molaire de 1 / < 2 à 1 / 0,15, ou

b) de l'oxyde de dibutyl-étain et de l'acide trifluoroacétique dans un rapport molaire de 1 / < 1,5 à 1 / 0,74, ou

c) de l'oxyde de tributyl-étain et de l'acide trifluoroacétique dans un rapport molaire de 1 / < 1,5 à 1 / 0,15.

8.   Préparation suivant l'une des revendications 6 et 7, caractérisée en ce qu'on utilise, comme solvant, de l'acétate d'éthyle ou de la méthyléthylcétone.